Europäisches Patentamt

European Patent Office

Office européen des brevets

(11) Veröffentlichungsnummer: **0 400 573**

**A1**

## (12) EUROPÄISCHE PATENTANMELDUNG

(21) Anmeldenummer: 90110151.9

(51) Int. Cl.5: **B29C 67/14, B29B 15/12**

(22) Anmeldetag: 29.05.90

(30) Priorität: 29.05.89 DE 3917402
19.06.89 DE 3919966
20.12.89 DE 3942190

(43) Veröffentlichungstag der Anmeldung:
05.12.90 Patentblatt 90/49

(84) Benannte Vertragsstaaten:
AT CH DE ES FR GB IT LI NL SE

(71) Anmelder: **Gummiwerke Becker AG**
**Robert-Koch-Strasse 3**
**D-7920 Heidenheim(DE)**

(72) Erfinder: **Hombsch, Jörg Peter, Dr.**
**Jahnstrasse 6**
**D-7928 Giengen an der Brenz(DE)**
Erfinder: **Krenkel, Bernhard, Dr.**
**Waiblingerweg 14**
**D-7920 Heidenheim(DE)**

(74) Vertreter: **Sajda, Wolf E., Dipl.-Phys. et al**
**MEISSNER, BOLTE & PARTNER**
**Widenmayerstrasse 48 Postfach 86 06 24**
**D-8000 München 86(DE)**

(54) Verfahren zur Herstellung von beidseitig beschichteten endlosen Lauftüchern, insbesondere für Papier- und Textilmaschinen, und Vorrichtung zur Durchführung des Verfahrens.

(57) Bei der Herstellung von beidseitig beschichteten endlosen Lauftüchern, insbesondere für Papier- und Textilmaschinen, werden die Lauftücher aus einem Elastomer hergestellt, das in seinem Inneren eine Armierung aufweist. Auf ein auf Spannwalzen (15, 16) umlaufendes Gewebe (12) als Armierung wird das elastomere Material (40) fließfähig aufgetragen und verbindet sich mit dem Gewebe (12). Ein Teil des elastomeren Materials durchdringt das Gewebe (12) durch Aufbringen eines dosierten Druckes. Zwischen dem Gewebe (12) und der Einrichtung (30) zum Hindurchdrücken des elastomeren Materials wird ein mitlaufendes Band (60) als Trennmittel eingeführt, wobei die beidseitige Beschichtung des Lauftuches in einem Arbeitsgang erfolgt.

FIG. 7

## Verfahren zur Herstellung von beidseitig beschichteten endlosen Lauftüchern, insbesondere für Papier- und Textilmaschinen, und Vorrichtung zur Durchführung des Verfahrens

Die Erfindung betrifft ein Verfahren zur Herstellung von beidseitig beschichteten endlosen Lauftüchern, insbesondere für Papier- und Textilmaschinen, wobei das Lauftuch aus einem Elastomer besteht und in seinem Inneren eine Armierung aufweist, sowie eine Vorrichtung zur Durchführung des Verfahrens.

Derartige Lauftücher werden beispielsweise in Naßpressen verwendet, wobei sie über entsprechende Walzenkerne laufen und Preßwalzen bilden, zwischen denen ein Preßspalt zum Entwässern von Faserstoffbahnen, z. B. Papierbahnen gebildet wird. Zu diesem Zweck wird die Papierbahn dann zwischen geeigneten Filzen durch den Preßspalt zwischen den Preßwalzen hindurchgeführt, um für die Wasserabführung aus der Papierbahn zu sorgen.

Derartige Lauftücher werden auch in sogenannten Breitnippressen verwendet, wobei durch längere Verweilzeiten unter hohem Druck höhere Trockengehalte der behandelten Papierbahnen erzielt werden können, weil durch geeignete konstruktive Maßnahmen mit einem sogenannten Preßschuh breitere Preßzonen zur Verfügung stehen, wobei die Verweilzeiten bis zu zehnmal größer sein können als bei herkömmlichen Walzenpressen.

Eine derartige Breitnippresse ist beispielsweise in der US-PS 42 29 253 beschrieben. Der wichtige Preßbereich ist in Fig. 1 schematisch angedeutet. Man erkennt einen Pressenschuh 3 sowie eine gegenüberliegende Preßwalze 4, die zwischeneinander den Preßspalt bilden, der die gesamte Breite des Pressenschuhs 3 ausmacht. Durch diesen Preßspalt läuft einerseits das Lauftuch 10 und andererseits der mitlaufende Preßfilz 2, auf dem z. B. die nicht dargestellte Papierbahn liegt.

Das Lauftuch 10 besteht üblicherweise aus einem textilen Gewebe, das einseitig oder beidseitig mit einer flüssigkeitsundurchlässigen, verschleißfesten Beschichtung aus einem Elastomer versehen ist.

Am Markt befindliche, einseitig beschichtete Lauftücher werden so eingesetzt, daß ihre abdichtend und verschleißfest beschichtete Seite nach innen gekehrt ist und über den feststehenden Pressenschuh 3 läuft, wobei das Lauftuch 10 von dem Pressenschuh 3 aus mit einem Hydraulikfluid beaufschlagt wird, um den gewünschten Preßdruck auszuüben. Bei solchen Lauftüchern ist nachteilig, daß auf der dem mitlaufenden Preßfilz 2 zugekehrten Seite des Lauftuches das nur innenseitig beschichtete, textile Gewebe offen und ungeschützt zu Tage tritt. Aufgrund der unter hohem Anpreßdruck des Pressenschuhs 3 stattfindenden Walkarbeit und durch die von der angetriebenen Preßwalze 4 auf das Lauftuch übertragenen Antriebsleistung unterliegt das Basisgewebe des Lauftuchs 10 einem sehr starken Verschleiß, der seine nützliche Lebensdauer auf wenige Wochen begrenzt.

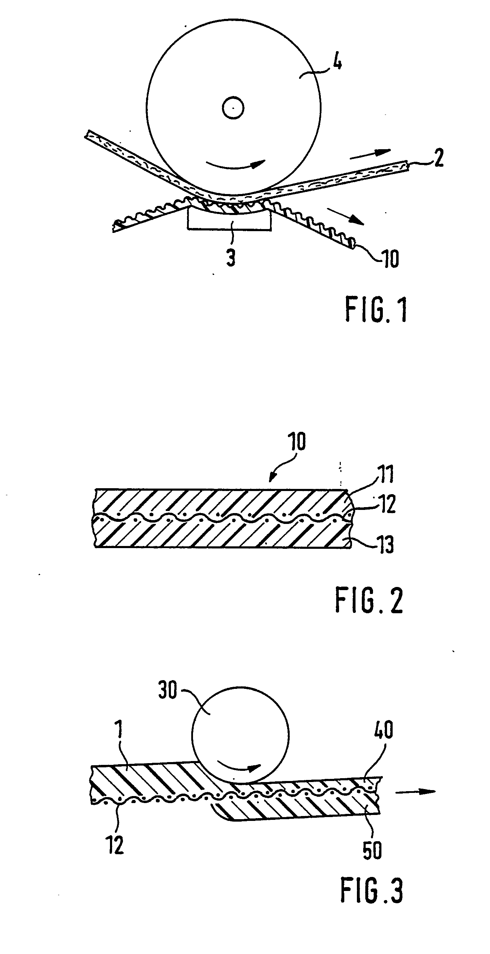

Die Verschleißfestigkeit eines derartigen Lauftuches kann durch beidseitige Beschichtung seiner Armierung im Inneren verbessert werden. Man verwendet dann ein Lauftuch 10, wie es schematisch in Fig. 2 dargestellt ist. Man erkennt ein Gewebe 12 als Armierung im Inneren des Lauftuches, das auf beiden Seiten eine Beschichtung 11 bzw. 13 aufweist. Solche beidseitig beschichteten Lauftücher 10 werden bislang in aufwendigen Verfahren hergestellt, die nacheinander eine Vielzahl von Arbeitsschritten benötigen. Bei der Fertigung des Lauftuches auf einem Konfektionsdorn wird zunächst die untere Beschichtung direkt auf dem Konfektionsdorn ausgebildet, dann das Armierungsgewebe aufgebracht und anschließend die äußere Beschichtung vorgenommen, so daß sich diese sowohl mit dem Gewebe als auch mit der unteren Beschichtung verbindet.

Bei anderen bekannten Herstellungsverfahren für beidseitig beschichtete Lauftücher werden die beiden Beschichtungen 11 und 13 jeweils einzeln und nacheinander von den beiden Seiten des Gewebes 12 aufgebracht, so daß sich die verwendeten Materialien der Beschichtungen 11 und 13 sowohl mit dem Gewebe 12 als auch miteinander verbinden.

An Lauftücher dieser Art werden hohe Anforderungen gestellt, insbesondere wenn sie bei Breitnippressen verwendet werden. Einerseits muß die Reibung zwischen dem Pressenschuh und dem Lauftuch verringert werden, was eine Schmierung erforderlich macht. Zu berücksichtigen ist hier, daß solche Pressen nach dem hydrostatischen oder hydrodynamischen Prinzip arbeiten, wobei als Schmiermittel üblicherweise Öl eingesetzt wird. Andererseits sollen solche Lauftücher auch in der Lage sein, auf der dem Papierfilz gegenüberliegenden Seite auch Wasser aufzunehmen. Damit müssen derartige Lauftücher extrem dimensionsstabil sowie öl- und wasserundurchlässig sein, zugleich aber auch flexibel sein und die Eigenschaft haben, auf der dem Filz zugekehrten Seite des Lauftuches ein Wasserspeichervolumen zu haben.

Derartige Lauftücher sind als solche schon seit vielen Jahren bekannt. In der DE-OS 22 62 201 werden beispielsweise solche Lauftücher verwendet und beispielsweise als Preßriemen bezeichnet. Über den genauen Aufbau des Lauftuches sowie ein Verfahren zu seiner Herstellung läßt sich dieser Schrift allerdings nichts entnehmen. Es ist lediglich ausgeführt, daß der Durchlauf von Wasser zu den Filzen verbessert und unterstützt werden soll.

In der DE-OS 28 32 054 sind endlose Lauftücher aus elastomerem Werkstoff beschrieben, wobei unterschiedliche Gewebe und Armierungen im Inneren des Lauftuches vorgesehen sind. Hierbei ist der Schichtenaufbau im einzelnen beschrieben, jedoch das Verfahren zur Herstellung derartiger Lauftücher nicht näher erläutert. In der US-PS 42 29 253, der US-PS 42 29 254 und der US-PS 42 28 287 sind weitere Lauftücher dieser Art angegeben, wobei sich Ausführungen über die Verbesserung der Dimensionsstabilität finden, indem man im Inneren des Lauftuches Armierungen mit Längsfäden, Querfäden bzw. schrägen Fadenlagen vorsieht.

Aus der DE-OS 32 31 039 ist ein Lauftuch bekannt, das aus einem mit einem festen Polymerisat imprägnierten Substrat auf Textilbasis besteht, das ausreichend offen ist, um eine durchgehende Imprägnierung ohne Hohlräume zu ermöglichen, und das durch die Imprägnierung mindestens auf der dem Pressenschuh zugewandten Seite eine glatte und undurchlässige Oberfläche aufweist. Zu diesem Zweck wird dort ein endloses Textilgewebe hergestellt, auf welches ein Polymer aufgebracht und mit einem Streichmesser in das Substrat eingebracht wird, das man dann aushärten läßt, um eine glatte Oberfläche zu bilden. In der DE-OS 32 35 468 ist ein ähnliches Lauftuch beschrieben, das hergestellt wird durch Aufschmelzen eines Polymerisats, wobei als Beschichtungsmaterialien Polyurethan oder Polypropylen angegeben werden. Die Eindringtiefe des Polymerisats in das Gewebe wird so gesteuert, daß auf der anderen Seite des Gewebes ausreichend Hohlräume verbleiben.

In beiden Fällen werden somit im wesentlichen einseitig beschichtete Lauftücher angegeben.

Derartige Lauftücher werden gemäß der EP-OS 0134885 dadurch weitergebildet, daß man eine blasenfreie, fließfähige Mischung eines Prepolymers mit einem Vernetzer in das die Zugkräfte in Längsrichtung des Bandes aufnehmende Armierungsband, insbesondere ein Gewebe, eindringen läßt. Dies geschieht durch Übergießen des aufgespannt gehaltenen und bewegten Gewebebandes. Da bei der Beschichtung des Armierungsbandes eine rillige Oberfläche besteht, muß das so hergestellte Lauftuch zur Erzielung einer glatten Bandoberfläche abgedreht oder naß abgeschliffen werden. Dieses Abschleifen stellt in nachteiliger Weise einen sehr zeitaufwendigen Vorgang dar, der ein Vielfaches der Zeit in Anspruch nimmt, die man zum Beschichten des Lauftuches benötigt.

Hierbei ist zu berücksichtigen, daß in Abhängigkeit vom jeweiligen Pressentyp sehr große Flächen zu bearbeiten sind, denn die Lauftücher haben eine Länge bis zu 14 m und eine Breite bis zu 10 m. Außerdem bilden diese Lauftücher endlose Schläuche, die nach der Bearbeitung noch gewendet werden müssen, weil die bearbeitete, glatte Oberfläche im Betrieb innen liegt, nämlich auf dem Pressenschuh.

Das Wenden eines derartigen schlauchförmigen Lauftuches ist nicht nur extrem schwierig aufgrund der Dimensionen des Lauftuches, sondern es stellt auch eine erhebliche Beschädigungsgefahr für das Lauftuch dar. Aus diesem Grunde hat man versucht, solche Lauftücher in anderer Weise herzustellen, damit das Wenden entfällt.

In der EP-OS 0273093 sind daher ein Verfahren und eine Vorrichtung zur Herstellen von dehnungsstabilen, flüssigkeitsundurchlässigen, biegsamen Lauftüchern, insbesondere für Naßpressen von Papiermaschinen angegeben, wobei ein Schleudergießverfahren zum Einsatz gelangt. Durch geeignete Wahl der Innenauskleidung des Schleuderrohres können auch Profilierungen in das Lauftuch während des Beschichtungsvorganges eingearbeitet werden. Auch wenn das Wenden des Lauftuches dort entfallen kann, bleibt es unvermeidlich, das im Schleuderrohr hergestellte Lauftuch anschließend auf seiner Innenseite zu schleifen, um die gewünschte glatte Oberfläche zu erhalten.

Derartige profilierte Lauftücher sind im übrigen auch aus der PCT-Veröffentlichung WO 87/02080 bekannt. Dort ist ein beidseitig beschichtetes Lauftuch angegeben, das an seiner einen Seite mit entsprechenden Nuten ausgebildet ist.

Aufgabe der Erfindung ist es daher, ein Verfahren und eine Vorrichtung der eingangs genannten Art anzugeben, mit denen eine einfachere Herstellung der Lauftücher möglich ist, insbesondere die Nachbearbeitung der Lauftücher wesentlich reduziert werden kann.

Die erfindungsgemäße Lösung besteht darin, ein Verfahren der in Rede stehenden Art so zu führen, daß es folgende Verfahrensschritte umfaßt: Herstellen eines endlosen Gewebes mit vorgegebene Länge und Breite; Aufspannen des Gewebes als Armierung auf mindestens zwei parallel zueinander verlaufenden drehbaren Spannwalzen; Beschichten des umlaufenden Gewebes von seiner Oberseite her mit einem elastomeren Material im flüssigen oder pastösen Zustand; Aufbringen eines dosierten Druckes auf die aufgetragene, noch fließfähige Beschichtungsmasse mit einer Einrichtung zum Hindurchdrücken des elastomeren Materials, so daß es teilweise durch das Gewebe hindurchgedrückt wird; und Einführen eines mitlaufenden Bandes als Trennmittel zumindest zwischen der Beschichtungsmasse auf dem Gewebe und der Einrichtung zum Hindurchdrücken des elastomeren Materials, so daß in einem Arbeitsgang ein beidseitig beschichtetes Lauftuch hergestellt wird.

Damit kann in vorteilhafter Weise ein Lauftuch gewünschter Dimensionierung hergestellt werden, das nicht mehr gewendet zu werden braucht und eine glatte Oberfläche besitzt, die kaum noch Nachbearbeitung erforderlich macht.

Die Schichtdicken zu beiden Seiten des Gewebes können in gewünschter Weise eingestellt werden durch verschiedene Maßnahmen, beispielsweise die Viskosität des verwendeten elastomeren Materials, die Umlaufgeschwindigkeit des Gewebes und/oder den Spaltabstand zwischen dem Gewebe einerseits und der Einrichtung zum Hindurchdrücken des elastomeren Materials andererseits. Diese Einrichtung kann insbesondere ein Rakel, ein Gleitschuh, eine Druckwalze und/oder eine Doppelwalze mit umlaufenden Band sein. Damit erfolgt ein gleichmäßiges Hindurchdrücken des elastomeren Materials, das aufgrund seiner Viskosität und der Oberflächenspannung an der gegenüberliegenden Seite des Gewebes haftet.

Als Trennmittel wird zweckmäßigerweise ein mitlaufendes Band verwendet, das eine glatte Oberfläche hat oder zumindest auf seiner der Beschichtungsmasse zugewandten Seite eine Profilierung aufweist, mit der entsprechende Formhohlräume in die Oberfläche des Lauftuches eingeprägt werden. Damit wird in vorteilhafter Weise unterstützt, daß die Herstellung des Lauftuches in einem einzigen Arbeitsgang erfolgt und dabei auch die gewünschte Oberflächenstruktur des Lauftuches erhalten wird. Dieses mitlaufende Band kann entweder als verlorene Folie auf dem beschichteten Lauftuch verbleiben oder aber unmittelbar hinter der entsprechenden Einrichtung wieder abgezogen werden.

Zweckmäßigerweise wird auch an der Unterseite des Gewebes ein mitlaufendes Band als Trennmittel zugeführt, dessen mit der durchgedrückten Beschichtungsmasse in Eingriff kommende Oberfläche wahlweise glatt oder mit einer gewünschten Profilierung ausgebildet ist. Zweckmäßigerweise wird dieses von der Unterseite zugeführte, mitlaufende Band von der Unterseite her gegen die Beschichtungsmasse angedrückt.

Damit wird das Verhältnis der Schichtdicken zueinander in gewünschter Weise eingestellt, wobei die von beiden Seiten auf die aufgebrachte Beschichtungsmasse ausgeübten Drücke entsprechend eingestellt werden.

Bei einer speziellen Ausführungsform des erfindungsgemäßen Verfahrens wird als mitlaufendes Band an der Innenseite des Gewebes ein einstückiger Schlauch verwendet, dessen Abmessungen entsprechend dem zu beschichtenden Gewebe gewählt werden und der unter dem Gewebe und gemeinsam mit diesem über die Spannwalzen geführt wird. Dadurch wird die Ausbildung einer glatten Oberfläche an der Innenseite des Lauftuches in besonders vorteilhafter Weise unterstützt, insbesondere wenn das Lauftuch für eine Breitnippresse vorgesehen ist.

Als Material für das mitlaufende Band kann beispielsweise Papier, insbesondere beschichtetes Papier oder Pergamentpapier verwendet werden, oder aber eine dünne Folie aus Metall oder Kunststoff, insbesondere aus Polyethylenterephthalat oder Polyvinylfluorid, die im Handel unter den Bezeichnungen Mylar oder Tedlar erhältlich sind. Diese Materialien haben den Vorteil, daß ein Klebenbleiben der Beschichtungsmasse an der Einrichtung zum Hindurchdrücken des elastomeren Materials vermieden wird und daß in vorteilhafter Weise auch Verschmutzungen der Spannwalzen vermieden werden können.

Das mitlaufende Band kann dabei in vorteilhafter Weise noch weitere Funktionen ausüben, nämlich als Auffänger für das elastomere Material als Beschichtungsmasse dienen, einen Sumpf für zugeführtes elastomeres Beschichtungsmaterial halten sowie durch seine Festigkeit und/oder seine Spannung die Schichtdicken zu beiden Seiten des Gewebes einstellen helfen.

Dabei wird in vorteilhafter Weise erreicht, daß sowohl die Laufgeschwindigkeit des Gewebes als auch die Zuführungsgeschwindigkeit des Gewebes der Beschichtungsmasse unabhängig von der Viskosität des elastomeren Materials frei gewählt werden können. Unabhängig davon, ob das elastomere Material kalt oder heiß vergossen wird, kann mit wesentlich langsameren Geschwindigkeiten als bisher gefahren werden, so daß keine Lufteinschlüsse oder Lunker in der Beschichtung entstehen. Zumindest wird die Qualität der gegossenen Beschichtungen wesentlich verbessert.

Bei einer anderen speziellen Ausführungsform des Verfahrens wird das Gewebe mit der aufgebrachten fließfähigen Beschichtungsmasse einem atmosphärischen Differenzdruck zwischen der Beschichtungsseite und der Rückseite des Gewebes ausgesetzt, um die fließfähige Beschichtungsmasse teilweise durch das Gewebe hindurchzudrücken. Dadurch wird in vorteilhafter Weise erreicht, daß kein direkter mechanischer Kontakt zwischen der Beschichtungsmasse einerseits und den Mitteln zum Hindurchdrücken des elastomeren Materials andererseits erforderlich ist, so daß besonders sauber gearbeitet werden kann.

Weiterhin ist vorgesehen, daß unter Verwendung eines für die Beschichtungsmasse inerten Gases von der Seite des Gewebes, auf der die Beschichtungsmasse aufgebracht worden ist, ein atmosphärischer Überdruck auf die Beschichtungsmasse ausgeübt wird, wobei zweckmäßigerweise ein Gas verwendet wird, das die Vernetzung des elastomeren Materials nicht beeinflußt, wobei sich beispielsweise Luft oder Stickstoff als derartige

Gase eignen.

Das erfindungsgemäße Verfahren kann auch so geführt werden, daß zusätzlich oder alternativ zu dem atmosphärischen Überdruck auf der primären Beschichtungsseite von der Rückseite des Gewebes her im Bereich der aufgebrachten Beschichtungsmasse ein Unterdruck ausgeübt wird, um auf diese Weise den erforderlichen Differenzdruck zu erzeugen.

In Weiterbildung des erfindungsgemäßen Verfahrens ist vorgesehen, daß vor der Druckbeaufschlagung, sei es durch Überdruck, sei es durch Unterdruck, ein mitlaufendes Band als Trennmittel zumindest zwischen der Beschichtungsmasse auf dem Gewebe und den Mitteln zum Hindurchdrücken bzw. Hindurchziehen des elastomeren Materials eingeführt und auf der fließfähigen Beschichtungsmasse abgelegt wird. Auf diese Weise wird der Auftrag der Beschichtungsmasse weiter vergleichmäßigt.

Die erfindungsgemäße Vorrichtung hat mindestens zwei parallel zueinander verlaufende äußere Spannwalzen, die in einem einstellbaren Abstand voneinander angeordnet sind und von denen mindestens eine Spannwalze drehbar angetrieben ist. Zur Bildung des gewünschten Lauftuches tragen die beiden Spannwalzen ein endloses Gewebe, über dem eine Beschichtungseinrichtung für elastomeres Material angeordnet ist. An der radial außenliegenden Seite des Gewebes ist eine Einrichtung vorgesehen, die gegenüber dem Gewebe einen einstellbaren Spalt quer zum Vorschub des Gewebes bildet und zum Hindurchdrücken der aufgebrachten Beschichtungsmasse dient. Dieser Einrichtung ist eine Halterung zugeordnet, von der ein mitlaufendes Band als Trennmittel zuführbar ist. Die jeweilige Einrichtung zum Hindurchdrücken ist zweckmäßigerweise in ihren Positionen relativ zu den Spannwalzen und dem umlaufenden Gewebe einstellbar, um den gewünschten Spaltabstand sowie den erforderlichen Druck zum Hindurchdrücken des Beschichtungsmaterials auszuüben.

Die der Einrichtung zum Hindurchdrücken zugeordnete Halterung hat zweckmäßigerweise eine Trommel, von der das mitlaufende Band unter Vorspannung abgezogen und von dem umlaufenden, beschichteten Gewebe mitgenommen wird. Dadurch wird das mitlaufende Band glatt und gespannt zugeführt, um die gewünschte Oberflächenbeschaffenheit des beschichteten Lauftuches zu erzielen.

Die Beschichtung selbst erfolgt mit herkömmlichen Beschichtungseinrichtungen in Form von einer oder mehreren Breitschlitzdüsen, deren Positionierung entsprechend eingestellt werden kann.

Diese Positionierung wird zweckmäßigerweise in Abhängigkeit vom Vorschub des Gewebes bzw. der Laufgeschwindigkeit der Spannwalzen eingestellt und gesteuert.

Eine entsprechende weitere Halterung für ein mitlaufendes Band ist zweckmäßigerweise an der Unterseite des zu beschichtenden Gewebes vorgesehen und in gleicher Weise ausgebildet wie die andere Halterung. Zusätzlich ist dabei zweckmäßigerweise eine Druckwalze für dieses mitlaufende Band vorgesehen, um in gewünschter und dosierter Weise von der Unterseite her gegen die durchgedrückte Beschichtungsmasse zu drücken, um definierte Verhältnisse zu schaffen.

Bei einer speziellen Ausführungsform der erfindungsgemäßen Vorrichtung wird eine vertikale Anordnung der beiden Spannwalzen übereinander verwendet. Die Einrichtung zum Hindurchdrücken des elastomeren Materials ist hierbei zweckmäßigerweise als Doppelwalze neben der unteren Spannwalze vorgesehen, wobei das umlaufende Band der Doppelwalze über einen Umfangsbereich der unteren Spannwalze in Anlage gegen diese verläuft, wobei dieses umlaufende Band im Betrieb eine Ausbauchung in Eingriff mit der Spannwalze hat und wobei zwischen diesem umlaufenden Band einerseits und dem zu beschichtenden Gewebe andererseits das elastomere Material sowie das mitlaufende Band als Trennfolie eingeführt werden. Die obere Walze der Doppelwalze bildet dabei zusammen mit dem Gewebe auf der unteren Spannwalze einen keilförmigen Einlaufbereich von oben für die Beschichtungsmasse aus der darüber angeordneten Beschichtungseinrichtung. Dabei erfolgt eine besonders gute Durchdringung des Gewebes durch die Beschichtungsmasse, wenn die Zuführung in der Nähe des Scheitels der unteren Spannwalze erfolgt, weil dann ein Sumpf aus der Beschichtungsmasse sowohl an der Unterseite als auch an der Oberseite des Gewebes gebildet werden kann und die Beschichtungsmasse beim anschließenden Umlaufen um die Spannwalze in Eingriff mit der äußeren Drückeinrichtung auf gewünschte Schichtdicken gebracht wird.

Wenn die untere Spannwalze dabei einen wesentlich größeren Durchmesser als die Spannwalze hat und/oder mit ihrer Achse seitlich gegenüber der Achse der oberen Spannwalze versetzt ist, wird in vorteilhafter Weise erreicht, daß das zu beschichtende Gewebe in diesem Bereich schräg von oben zuläuft, was die Durchdringung ebenfalls unterstützt.

Bei der Herstellung von breiteren Lauftüchern erweist es sich als vorteilhaft, wenn die Beschichtung des Gewebes längs einer schraubenlinienförmigen Bahn erfolgt, wobei das Hindurchdrücken der Beschichtungsmasse auch erst dann erfolgen kann, wenn sich diese etwas verfestigt hat, jedoch noch ausreichend fließfähig ist. Diese schraubenlinienförmige Beschichtung, z. B. durch Aufgießen, kann sehr exakt nebeneinander erfolgen, so daß allenfalls im Bereich des jeweiligen Stoßes eine Nachbearbeitung erforderlich werden kann.

Bei einer speziellen Ausführungsform weist die Einrichtung zum Hindurchdrücken der aufgebrachten fließfähigen Beschichtungsmasse über der Auftragsseite und in unmittelbarer Nähe der Beschichtungsmasse eine Kammer auf, die an eine Druckquelle für ein inertes Druckgas angeschlossen ist und mit der ein Gasdruckkissen über der Beschichtungsmasse erzeugt werden kann. Durch diese praktisch berührungslos funktionierende Druckeinrichtung ist ein sauberer Verfahrensablauf gewährleistet, der eine besonders glatte und gleichmäßige Oberfläche der aufgebrachten Beschichtung ergibt.

Die Kammer kann als Düse, beispielsweise als Breitschlitzdüse, die sich zur Beschichtungsmasse hin glockenförmig verbreitert, oder auch als rechteckiger Kasten quer zur Vorschubrichtung ausgebildet sein.

In Weiterbildung der erfindungsgemäßen Vorrichtung ist vorgesehen, daß die der Beschichtungsmasse gegenüberliegenden Ränder der Kammer mit Dichtungen versehen sind, welche den Überdruckraum gegenüber der Beschichtungsmasse abdichten, damit ein möglichst gleichmäßiges Gasdruckkissen über der Beschichtungsmasse ausgebildet wird. Bei geeigneter Abdichtung kann die Menge des zugeführten Druckgases reduziert werden, wenn entsprechend kleinere Mengen des Druckgases zwischen der Kammer einerseits und der Beschichtungsmasse andererseits entweichen.

Bei einer speziellen Ausführungsform können als Dichtungen berührungslose Einfach- oder Mehrfachspaltdichtungen vorgesehen sein, die zweckmäßigerweise quer zur Vorschubrichtung verlaufen. Zusätzlich oder alternativ können auch gleitfähige Dichtstreifen als Dichtungen verwendet werden, die auf dem mitlaufenden Band als Trennmittel auf der Beschichtungsmasse abdichtend entlanggleiten. Als Trennmittel können dabei zweckmäßigerweise Materialien, wie z.B. beschichtetes Papier oder Pergamentpapier, dünne Folien aus Metall oder aus Kunststoff, insbesondere aus Mylar oder Tedlar verwendet werden, wie es im einzelnen oben erläutert ist.

In Weiterbildung der erfindungsgemäßen Vorrichtung ist zusätzlich oder alternativ zu der Druckkammer an der Rückseite des Gewebes eine Unterdruckkammer zum Hindurchdrücken der fließfähigen Beschichtungsmasse vorgesehen. Damit kann wahlweise mit Druck und/oder Zug gearbeitet werden, um den gewünschten Differenzdruck auszubilden.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher beschrieben. Die Zeichnungen zeigen in

Fig. 1 eine schematische Seitenansicht im Schnitt der wesentlichen Teile einer Breitnippresse;

Fig. 2 eine schematische Seitenansicht im Schnitt eines beidseitig beschichteten Lauftuches;

Fig. 3 bis 6 schematische Seitenansichten im Schnitt zur Erläuterung der Wirkungsweise von verschiedenen Ausführungsformen einer Einrichtung zum Hindurchdrücken von elastomerem Material als Beschichtungsmasse für das Gewebe;

Fig. 7 und 8 der Fig. 3 ähnliche Darstellungen von abgewandelten Ausführungsformen, wobei verschiedene, als Trennmittel wirkende mitlaufende Bahnen zugeführt werden;

Fig. 9 eine weitere abgewandelte Ausführungsform einer derartigen Einrichtung, wobei zusätzlich im unteren Bereich ein weiteres mitlaufendes Band zugeführt wird;

Fig. 10 eine schematische Draufsicht auf eine Vorrichtung zur Herstellung von endlosen Lauftüchern;

Fig. 11 und 12 schematische Seitenansichten im Schnitt zur Erläuterung von speziellen Ausführungsformen der erfindungsgemäßen Vorrichtung; und in

Fig. 13 bis 15 schematische Seitenansichten im Schnitt zur Erläuterung der Wirkungsweise von verschiedenen Varianten des erfindungsgemäßen Verfahrens anhand der Wirkungsweise von verschiedenen Ausführungsformen der Einrichtungen zum Hindurchdrücken von elastomerem Material als Beschichtungsmasse durch das Gewebe zur Herstellung der beidseitig beschichteten Lauftücher.

Bei der Ausführungsform gemäß Fig. 3 ist mit einer nicht dargestellten Beschichtungseinrichtung das elastomere Material im flüssigen oder pastösen Zustand auf ein Gewebe 12 aufgebracht worden, wo es eine Beschichtungsmasse 1 bildet. Dieses Gewebe 12 ist auf hier nicht dargestellten Spannwalzen aufgespannt und von diesen in Richtung des Pfeiles in Fig. 3 angetrieben.

An der Oberseite des Gewebes 12 befindet sich eine Druckwalze 30, die quer zur Vorschubrichtung des Gewebes 12 angeordnet ist und gegenüber dem Gewebe 12 einen vorgegebenen einstellbaren Abstand hat, so daß die Spaltbreite zwischen ihnen gesteuert werden kann.

Die Druckwalze 30 kann feststehend oder aber, wie in Fig. 3 mit dem Pfeil angedeutet, drehbar sein. Es bildet sich dann unter der Druckwalze 30 ein schräg verlaufender Verdrängungsbereich, derart, daß die Beschichtungsmasse 1 teilweise durch das Gewebe 12 hindurchgedrückt wird, so daß eine obere Beschichtung 40 und eine untere Beschichtung 50 entstehen. Bei entsprechend gewählter Viskosität der Beschichtungsmasse bildet diese an der Unterseite aufgrund der Oberflächenspannung eine durchgehende untere Beschichtung 50. Das Verhältnis der Schichtdicken von oberen und unteren Beschichtungen 40 und 50 kann durch die Positionierung der Druckwalze 30 eingestellt werden.

In ähnlicher Weise kann das Hindurchdrücken der Beschichtungsmasse 1 mit einer Doppelwalze 34, 35 erfolgen, die drehbar gelagert sind und zwischen denen zweckmäßigerweise ein umlaufendes Band 31 vorgesehen ist. Selbstverständlich kann in dem Zwischenraum zwischen den beiden Walzen 34 und 35 ein weiteres Teil zum Hindurchdrücken der Beschichtungsmasse vorgesehen sein, beispielsweise zur Abstützung des umlaufenden Bandes 31 in diesem Bereich, wenn es gewünscht wird.

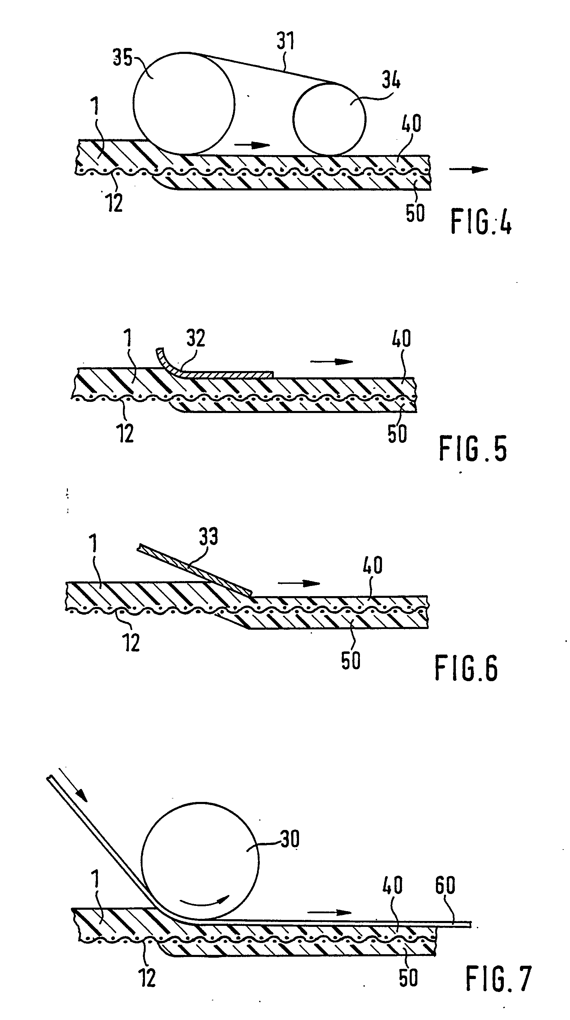

Bei den Ausführungsformen gemäß Fig. 5 und 6 sind die Druckwalzen ersetzt durch einen Gleitschuh 32 bzw. ein Rakel 33, die ebenfalls einen entsprechenden, schräg nach unten gerichteten Verdrängungsbereich für die Beschichtungsmasse 1 bilden, so daß die entsprechenden unteren und oberen Beschichtungen 40 bzw. 50 gebildet werden, wobei die oben beschriebenen Effekte genutzt werden.

Fig. 7 zeigt eine der Fig. 3 ähnliche Ausführungsform, wobei von einer nicht dargestellten Halterung ein mitlaufendes Band 60 als Trennmittel zugeführt wird, um zuverlässig zu verhindern, daß die Beschichtungsmasse 1 an der Druckwalze 30 haften bleibt und diese verschmutzt.

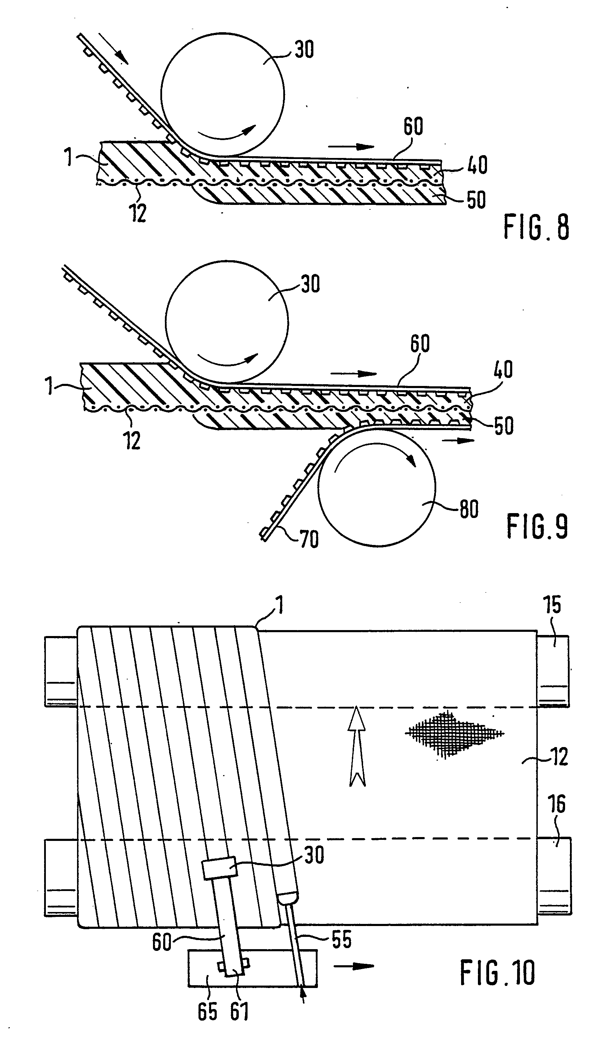

Eine ganz ähnliche Ausführungsform zeigt Fig. 8, wobei das mitlaufende Band 60 in diesem Falle als profiliertes Band ausgebildet ist, mit der die Beschichtungsmasse 1 bzw. die aus ihr entstehende obere Beschichtung 40 entsprechend geprägt wird, also mit einer Lochung, Rillenprägung oder einem sonstigen Prägemuster versehen wird. Die Profilierung ist hierbei absichtlich etwas übertrieben dargestellt und in den meisten Fällen wesentlich feiner gehalten, um beispielsweise Wasserspeicher zu bilden.

In Fig. 9 erkennt man eine weitere abgewandelte Ausführungsform mit ähnlichem Aufbau wie in Fig. 8. Zusätzlich ist an der Unterseite des Gewebes 12 eine weitere Druckwalze 80 vorgesehen, über die ein von der Unterseite zugeführtes mitlaufendes Band 70 als Trennfolie einläuft. Auch wenn dieses mitlaufende Band 70 in Fig. 9 profiliert gezeichnet ist, kann hier selbstverständlich auch eine völlig glatte Trennfolie als mitlaufendes Band zugeführt werden.

Bei den vorstehend beschriebenen Ausführungsformen kann das mitlaufende Band 60 bzw. 70 beispielsweise aus Papier, Metall oder Kunststoff bestehen. Besonders geeignet sind hierbei beschichtete Papiere oder Pergamentpapier, dünne Blechfolien oder Folien aus Kunststoff, insbesondere aus Mylar oder Tedlar. Diese mitlaufenden Bänder 60 bzw. 70 werden zweckmäßigerweise von einer nicht dargestellten Halterung straff gespannt, unter Vorspannung zugeführt, so daß sie einerseits die jeweiligen Einrichtungen zum Hindurchdrücken der Beschichtungsmasse 1 schützen, andererseits für die gewünschte Oberflächenausbildung der beiden Beschichtungen 40 bzw. 50 sorgen.

Diese mitlaufenden Bänder 60 bzw. 70 können sehr dünn ausgebildet sein und lassen sich problemlos nach dem Erhärten der Beschichtungsmasse wieder abziehen. Sie können auch zu einem beliebigen späteren Zeitpunkt von dem hergestellten Lauftuch entfernt werden.

Die schematische Darstellung gemäß Fig. 10 zeigt ein die Armierung bildendes Gewebe 12 aufgespannt auf zwei parallel zueinander angeordneten Spannwalzen 15 und 16, von denen zumindest eine mit einer nicht dargestellten Einrichtung angetrieben ist. Selbstverständlich können auch beide Spannwalzen 15 und 16 synchron miteinander angetrieben sein. Im Bereich der einen Spannwalze 16 ist eine gemeinsame Basis 65 vorgesehen, die sowohl eine schematisch angedeutete Beschichtungseinrichtung 55 als auch eine Halterung 61 trägt, von der ein mitlaufendes Band 60 in vorgespannter Form abgezogen wird und dann unter einer Druckwalze 30 einläuft, mit der die aufgebrachte Beschichtungsmasse 1 in der oben angegebenen Weise durch das Gewebe 12 hindurchgedrückt wird, um die untere Beschichtung sowie die obere Beschichtung in einem Arbeitsgang zu ergeben. Die Druckwalze 30 ist dabei in nicht dargestellter Weise über der einen Spannwalze 16 angeordnet, so daß in diesem Falle die Spannwalze 16 die Funktion der Druckwalze 80 gemäß Fig. 9 übernimmt.

In der dargestellten Weise wird die Beschichtungsmasse schraubenförmig in entsprechenden Breiten auf das Gewebe 12 aufgetragen, wobei feststehende oder oszillierende Düsen zum Aufgießen des entsprechenden elastomeren Materials verwendet werden können. Dadurch entsteht insgesamt eine geschlossene Beschichtung des Gewebes, wobei die schraubenförmigen Bahnen unmittelbar nebeneinander aufgebracht werden. Mit der Einrichtung zum Hindurchdrücken des elastomeren Materials, in diesem Falle mit der Druckwalze 30 erfolgt ein gleichmäßiges Hindurchdrücken des Materials sowie eine gleichmäßige Ausbildung der Oberfläche der oberen Beschichtung auf dem Gewebe 12. Selbst wenn in diesem Stoßbereich Unregelmäßigkeiten auftreten sollten, ist der Aufwand der Nachbearbeitung in diesem Bereich wesentlich kleiner als der sonst erforderliche Schleifaufwand bei der Herstellung von herkömmlichen Lauftüchern.

Bei der Anordnung gemäß Fig. 10 ist zwar kein mitlaufendes Band für die Innenseite des herzustellendes Lauftuches erkennbar. Diese kann in entsprechender Weise im Bereich zwischen den beiden Spannwalzen 15 und 16 vorgesehen sein, beispielsweise als endloser Schlauch um beide Spannwalzen 15 und 16 unter dem Gewebe 12 herumgelegt sein und dabei eine Breite haben, die mindestens gleich der Breite des Gewebes 12 ist.

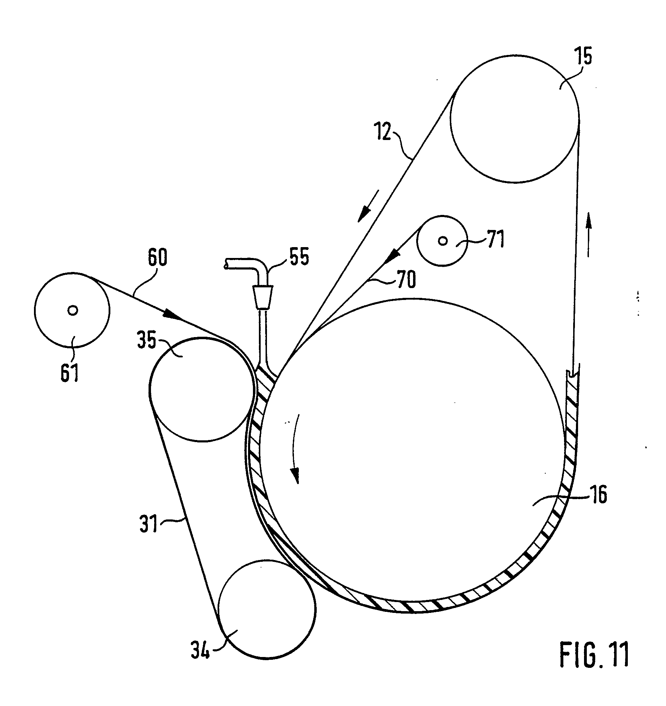

Fig. 11 zeigt eine spezielle Ausführungsform der erfindungsgemäßen Vorrichtung. Man erkennt eine vertikale Anordnung der beiden Spannwalzen 15 und 16 übereinander, wobei die Achsen der beiden parallel zueinander verlaufenden Spannwalzen seitlich versetzt sind. Dadurch läuft das Gewebe 12 im oberen Bereich schräg von oben auf die untere Spannwalze 16 zu. In Anlage an die untere Spannwalze 16 erkennt man eine Einrichtung zum Hindurchdrücken des elastomeren Materials in Form einer Doppelwalze 34 und 35 mit einem herumgeschlungenen, umlaufenden Band 31, das über einen gewünschten Umfangsbereich der unteren Spannwalze in Anlage gegen diese verläuft.

Eine Halterung 61, beispielsweise eine Trommel ist in der Nähe der oberen Druckwalze 35 vorgesehen. Von dieser Halterung 61 wird ein mitlaufendes Band 60 unter Vorspannung abgezogen und von dem umlaufenden, beschichteten Gewebe 12 mitgenommen. Im Innenraum zwischen den beiden Spannwalzen 15 und 16 sowie dem Gewebe 12 erkennt man eine weitere Halterung 71, beispielsweise eine Trommel, von der ein mitlaufendes Band 70 unter Vorspannung abgezogen und dann von dem umlaufenden Gewebe 12 auf der Spannwalze 16 mitgenommen wird.

Alternativ dazu kann dieses mitlaufende Band 70 ersetzt werden durch ein endloses umlaufendes Band, das schlauchförmig um beide Spannwalzen 15 und 16 herumgeschlungen ist und unter dem zu beschichtenden Gewebe 12 liegt.

Die Zuführung der Beschichtungsmasse erfolgt mit einer Beschichtungseinrichtung 55 über einem keilförmigen Einlaufbereich, gebildet von der oberen Druckwalze 35 mit dem Band 60 einerseits und der unteren Spannwalze 16 mit dem Gewebe 12 andererseits. In diesem Falle wird die untere Druckwalze 80 gemäß Fig. 9 durch die Spannwalze 60 ersetzt.

Bei der Ausführungsform gemäß Fig. 11 bildet sich in dem Einlaufbereich ein "Sumpf" aus Beschichtungsmasse, der dann durch die Drehbewegung der Walzen die gewünschte Beschichtung des Gewebes 12 bildet. Einstellmöglichkeiten der Schichtdicken bestehen hierbei durch die Spannung des umlaufenden Bandes 70, den Spaltabstand zwischen den Druckwalzen 34 und 35 sowie der Spannwalze 16, die Spannung des umlaufenden Bandes 31 sowie den Spaltabstand zwischen der Druckwalze 34 und der Spannwalze 16.

Dabei kann in Abwandlung der Ausführungsform gemäß Fig. 11 eine einzelne Druckwalze 35 verwendet werden, jedoch erweist sich die Anordnung gemäß Fig. 11 insofern als vorteilhaft, als über einen längeren Umlaufweg ein entsprechender Druck auf das soeben aufgebrachte Beschichtungsmaterial ausgeübt werden kann, um die gewünschte Schichtenanordnung zu erzielen.

Bei entsprechender Ausgestaltung der Beschichtungseinrichtung kann die Beschichtung des Gewebes 12 über die gesamte Breite in mehreren Umläufen oder auch in nur einem einzigen Umlauf erfolgen, wobei mit einer entsprechenden Anzahl von feststehenden oder oszillierenden Breitschlitzdüsen gearbeitet wird.

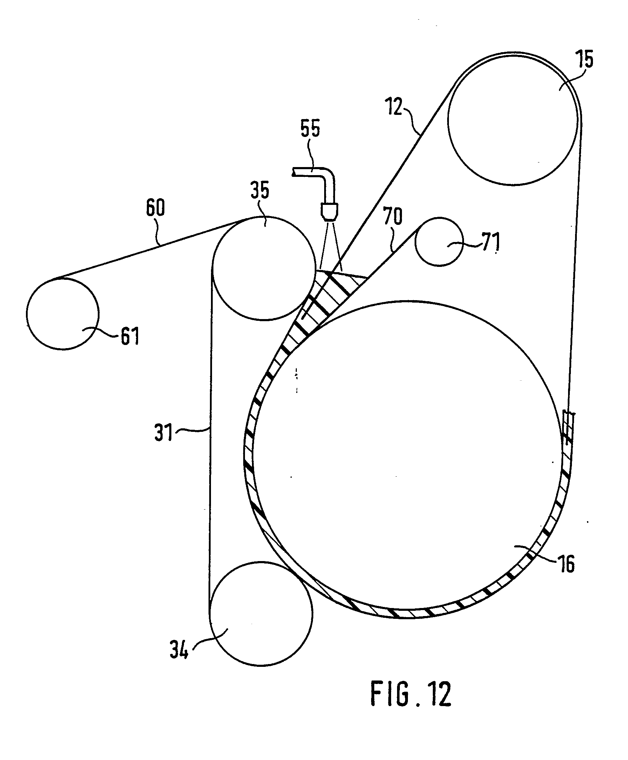

In Abwandlung der in Fig. 11 dargestellten Ausführungsform kann bei der Ausführungsform gemäß Fig. 12 die Beschichtungseinrichtung 55 auch dichter am oberen Scheitel der unteren Spannwalze 16 angeordnet werden, wie es in Fig. 12 schematisch angedeutet ist. Dadurch wird gewährleistet, daß die Beschichtungsmasse nicht nur vertikal, sondern schräg von oben einläuft. Es wird dabei eine besonders gute Durchdringung des Gewebes 12 erzielt, so daß sich sowohl zwischen der Druckwalze 35 mit umlaufendem Band 31 und dem Gewebe 12 einerseits als auch zwischen dem Gewebe 12 und dem unteren mitlaufenden Band 70 andererseits jeweils ein Sumpf aus Beschichtungsmaterial ausbilden kann, aus welchem das Beschichtungsmaterial dann unmittelbar darauf auf die gewünschte Schichtdicke gedrückt wird. Das Volumen eines derartigen Sumpfes ist dabei abhängig von der Menge an zugeführtem Beschichtungsmaterial aus der Beschichtungseinrichtung 55. Bei der Ausführungsform gemäß Fig. 12 kann die Achse der oberen Spannwalze 50 auch noch weiter nach rechts versetzt sein, um einen flacheren Einlauf des Gewebes 12 zu erzielen und die Durchdringung des Gewebes 12 durch das Beschichtungsmaterial zu erleichtern.

Es ist auch möglich, in Abwandlung der in den Fig. 11 und 12 dargestellten Ausführungsformen zwischen dem unteren mitlaufenden Band 70 sowie der Unterseite des Gewebes 12 eine zusätzliche Düse als Beschichtungseinrichtung für die Zuführung von elastomerem Material vorzusehen, um in diesem Bereich einen Sumpf aus Beschichtungsmaterial zu bilden.

Als elastomeres Material zur Beschichtung des Gewebes 12 und zur Ausbildung der fertigen Lauftücher 10 können verschiedene elastomere Materialien verwendet werden, beispielsweise Kautschuk, Gummi, Nitrilen und/oder Polyurethan. Zweckmäßigerweise werden hierbei TDI-Systeme zur Anwendung gebracht, beispielsweise Mischungen aus TDI-Isocyanat mit einem entsprechenden Diamin-Gemisch oder aber Gemische aus TDI-Isocyanat und einem Polyester-Diamin-Gemisch. Dabei können handelsübliche Polyole verwendet werden, die in abhängigkeit von den gewünschten Elastizitäts- und Festigkeitseigenschaften der herzustellenden Beschichtungen gewählt werden.

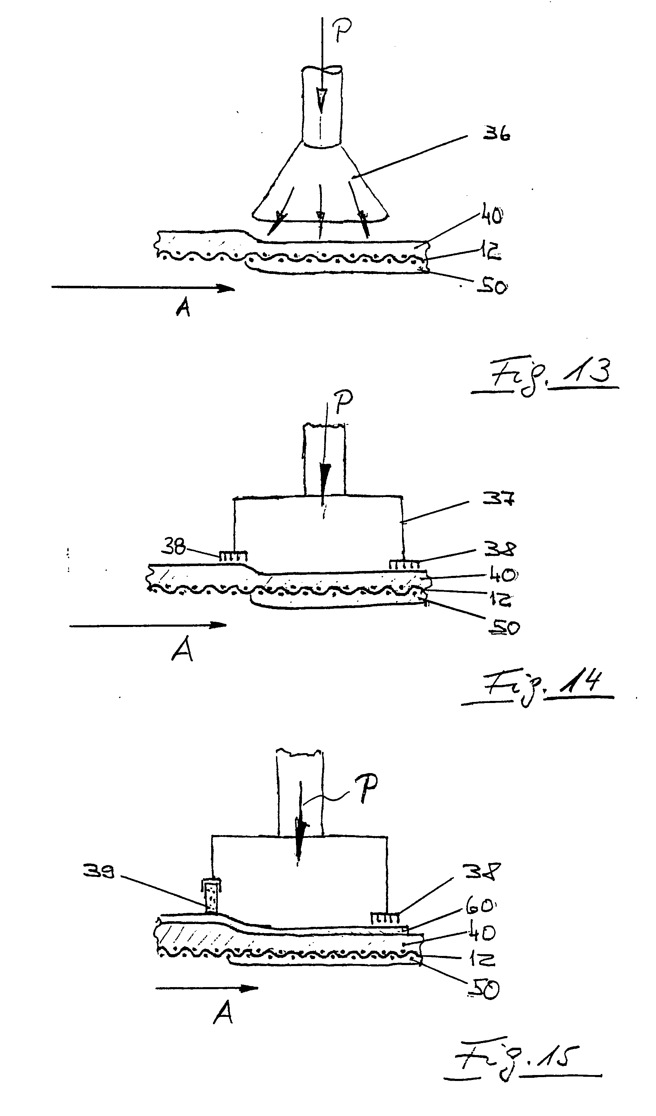

Bei der Ausführungsform gemäß Fig.13 ist zunächst ein endloses Gewebe mit vorgegebener Länge und Breite in an sich bekannter Weise hergestellt worden. Dieses endlose Gewebe ist als Armierung des herzustellenden Lauftuches auf mindestens zwei parallel zueinander verlaufenden drehbaren Spannwalzen aufgespannt, mit denen das Gewebe mit gewünschtem Vorschub in Richtung des Pfeiles A in Fig.13 antreibbar ist.

Bei der Ausführungsform gemäß Fig.13 ist weiterhin mit einer nicht dargestellten Beschichtungseinrichtung das elastomere Material im flüssigen oder pastösen Zustand auf das Gewebe 12 aufgebracht worden, wo es die obere Beschichtungsmasse 40 bildet.

Oberhalb des Gewebes 12 mit der aufgebrachten Beschichtungsmasse 40 befindet sich eine Kammer 36, die an eine nicht dargestellte Druckquelle für ein inertes Druckgas angeschlossen ist. Unter inertem Druckgas wird in diesem Zusammenhang ein Gas verstanden, welches die Vernetzung des elastomeren Materials der Beschichtungsmasse 40 nicht beeinflußt. Es kann sich hierbei in kostengünstiger Weise um Luft oder Stickstoff handeln, wobei auch andere Gase verwendet werden können, solange sie die Eigenschaften des elastomeren Materials nicht beeinträchtigen.

Das über die Kammer 36 zugeführte Gas hat somit lediglich die Aufgabe, einen atmosphärischen differenzdruck zwischen der Beschichtungsseite einerseits und der Rückseite des Gewebes andererseits zu erzeugen, damit die fließfähige Beschichtungsmasse 40 teilweise durch das Gewebe 12 hindurchgedrückt wird und an der Rückseite des Gewebes 12 die untere Beschichtungsmasse 50 bildet.

Dieser Vorgang ist in Fig.13 schematisch dargestellt, wobei die Kammer 36 in diesem Falle von einer Düse bzw. einer Breitschlitzdüse gebildet wird, die sich zur Beschichtungsmasse hin konusförmig oder glockenförmig verbreitert. In der Richtung senkrecht zur Papierebene hat die Kammer 36 eine gewünschte breitenmäßige Erstreckung quer zur Vorschubrichtung des Gewebes 12.

Der Abstand zwischen der Kammer 36 einerseits und der Oberseite der Beschichtungsmasse 40 andererseits wird in geeigneter Weise so gewählt, daß eine Berührung mit der Unterkante der Kammer 36 vermieden wird. Damit ist ein besonders sauberes Arbeiten gewährleistet, ohne daß aufwendige Reinigungsarbeiten erforderlich wären.

Fig.14 zeigt eine abgewandelte Ausführungsform der erfindungsgemäßen Vorrichtung, wobei eine Kammer in Form eines rechteckigen Kastens 37 quer zur Vorschubrichtung in Richtung des Pfeiles A verwendet wird. Man erkennt, daß dieser Kasten 37 an den Rändern, die der Beschichtungsmasse 40 gegenüberliegen, Dichtungen 38 aufweist, um ein unerwünschtes Entweichen des mit dem Pfeil P angedeuteten Druckgases zwischen der Kammer 37 einerseits und der oberen Beschichtungsmasse 40 andererseits zu verhindern. Bei der Ausführungsform gemäß der Fig.14 können diese Dichtungen 38 als berührungslose Einfach- oder Mehrfachspaltdichtungen ausgebildet sein, in denen sich das von innen zugeführte Druckgas fängt und damit für die gewünschte Abdichtung sorgt.

Damit die Dichtungen 38 ihre berührungslose Funktion ausüben können, ist die stromaufwärtige Dichtung 38 zweckmäßigerweise etwas höher über der Beschichtungsmasse 40 angeordnet, wie es Fig.14 schematisch zeigt.

In Fig.15 ist eine weitere Ausführungsform der erfindungsgemäßen Vorrichtung dargestellt, die eine Abwandlung der Konstruktion gemäß Fig.14 darstellt. In diesem Falle wird die stromaufwärtige Dichtung von einem gleitfähigen Dichtstreifen 39 gebildet, der beispielsweise aus Filz oder einem anderen gleitfähigen Material bestehen kann.

Da in diesem Falle im stromaufwärtigen Bereich eine mit Berührung arbeitende Dichtung 39 vorgesehen ist, ist die obere Beschichtungsmasse 40 in diesem Falle vorher mit einem mitlaufenden Band 60 als Trennmittel versehen worden. Es handelt sich dabei um ein Trennmittel bzw. ein mitlaufendes Band, das im einzelnen im Hauptpatent erläutert worden ist. Auf diese Weise wird im stromaufwärtigen Bereich eine besonders gute Abdichtung erreicht, so daß der aufgebaute atmosphärische Überdruck besonders wirksam in diesem Bereich ist.

Besonders vorteilhaft ist es, wenn die Dichtungen 38 bzw. 39 bei den Ausführungsformen gemäß Fig.14 und 15 in ihrer Höhe gegenüber der Beschichtungsmasse 40 einstellbar sind, um einerseits die gewünschte Dichtigkeit und andererseits den erforderlichen Abstand bzw. Kontakt herstellen zu können.

Selbstverständlich können auch bei der Ausführungsform gemäß Fig.13 entsprechende Dichtungen 38 bzw. 39 an den Rändern der Kammer 36 vorgesehen sein, um die vorstehend beschriebene Wirkung zu erzielen.

Bei einer weiteren, nicht dargestellten Ausführungsform der erfindungsgemäßen Vorrichtung kann zusätzlich oder alternativ zu der Druckkammer 36 bzw. 37 an der Rückseite, also an der Unterseite des Gewebes eine Unterdruckkammer zum Hindurchdrücken der fließfähigen Beschichtungsmasse vorgesehen sein. Es kann sich dabei um eine Kammer mit ähnlichem Aufbau wie die Kammern 36 bzw. 37 handeln, die dann natürlich an eine entsprechende Unterdruckquelle angeschlossen sind.

In jedem Falle kommt es darauf an, die aufgebrachte Beschichtungsmasse durch die Ausbildung
eines atmosphärischen Differenzdruckes in zuverlässiger und gleichmäßiger Weise durch das Gewebe hindurchzudrücken.

## Ansprüche

1. Verfahren zur Herstellung von beidseitig beschichteten endlosen Lauftüchern, insbesondere für
Papier- und Textilmaschinen, wobei das Lauftuch
aus einem Elastomer besteht und in seinem Inneren eine Armierung aufweist,
gekennzeichnet durch folgende Verfahrensschritte:

a) Herstellen eines endlosen Gewebes (12)
mit vorgegebener Länge und Breite,

b) Aufspannen des Gewebes (12) als Armierung auf mindestens zwei parallel zueinander verlaufenden drehbaren Spannwalzen (15,16),

c) Beschichten des umlaufenden Gewebes
(12) von seiner Oberseite her mit einem elastomeren Material im flüssigen oder pastösen Zustand,

d) Aufbringen eines dosierten Druckes auf
die aufgetragene, noch fließfähige Beschichtungsmasse (1, 40), mit einer Einrichtung (30-35, 36-39)
zum Hindurchdrücken des elastomeren Materials,
so daß es teilweise durch das Gewebe (12) hindurchgedrückt wird, und

e) Einführen eines mitlaufenden Bandes (60)
als Trennmitte zumindest zwischen der Beschichtungsmasse (1, 40) auf dem Gewebe (12) und der
Einrichtung (30-35, 36-39) zum Hindurchdrücken
des elastomeren Materials (1,40), so daß in einem
Arbeitsgang ein beidseitig beschichtetes Lauftuch
hergestellt wird.

2. Verfahren nach Anspruch 1,
dadurch gekennzeichnet,
daß die Schichtdicken (40, 50) zu beiden Seiten
des Gewebes (12) durch die Viskosität des verwendeten Prepolymers, insbesondere eines Mehrkomponentenkunststoffs, wie z. B. Polyurethan,
und/oder durch die Umlaufgeschwindigkeit des Gewebes (12) und/oder durch den Spaltabstand zwischen Gewebe (12) und Einrichtung (30-35, 36-39)
zum Hindurchdrücken eingestellt werden.

3. Verfahren nach Anspruch 1 oder 2,
dadurch gekennzeichnet,
daß als Einrichtung (30-35) zum Hindurchdrücken
des elastomeren Materials ein Rakel (33), ein Gleitschuh (32), eine Druckwalze (30) und/oder eine
Doppelwalze (34, 35) mit umlaufendem Band (31)
verwendet werden.

4. Verfahren nach Anspruch 1 oder 2,
dadurch gekennzeichnet,
daß das Gewebe (12) mit der aufgebrachten fließfähigen Beschichtungsmasse (1, 40) einem atmosphärischen Differenzdruck zwischen der Beschichtungsseite und der Rückseite des Gewebes (12)
ausgesetzt wird, um die fließfähige Beschichtungsmasse (1, 40) teilweise durch das Gewebe (12)
hindurchzudrücken.

5. Verfahren nach Anspruch 4,
dadurch gekennzeichnet,
daß unter Verwendung eines für die Beschichtungsmasse (1, 40) inerten, die Vernetzung des
elastomeren Materials nicht beeinflussenden Gases, wie z. B. Luft oder Stickstoff, von der Seite
des Gewebes (12), auf der die Beschichtungsmasse (1, 40) aufgebracht worden ist, ein atmosphärischer Überdruck auf die Beschichtungsmasse (1,
40) aufgebracht wird und daß gegebenenfalls von
der Rückseite des Gewebes (12) her im Bereich
der aufgebrachten Beschichtungsmasse ein Unterdruck ausgeübt wird.

6. Verfahren nach einem der Ansprüche 1 bis
5,
dadurch gekennzeichnet,
daß vor der Druckbeaufschlagung ein mitlaufendes
Band (60) als Trennmittel zumindest zwischen der
Beschichtungsmasse (1, 40) auf dem Gewebe und
den Mitteln zum Hindurchdrücken bzw. Hindurchziehen des elastomeren Materials (1, 40) eingeführt
und auf der fließfähigen Beschichtungsmasse (1,
40) abgelegt wird, wobei das mitlaufende Band (60)
eine glatte Oberfläche hat oder zumindest auf seiner der Beschichtungsmasse (1, 40) zugewandten
Seite eine Profilierung aufweist, mit der entsprechende Formhohlräume in die Oberfläche des
Lauftuches eingeprägt werden, und wobei das jeweilige mitlaufende Band (60) gegebenenfalls als
verlorene Folie auf dem beschichteten Lauftuch
gelassen wird.

7. Verfahren nach einem der Ansprüche 1 bis
6,
dadurch gekennzeichnet,
daß als mitlaufendes Band (60) an der Innenseite
des Gewebes (12) ein einstückiger Schlauch, dessen Abmessungen entsprechend dem zu beschichteten Gewebe (12) gewählt werden und der unter
dem Gewebe (12) und gemeinsam mit diesem
über die Spannwalzen (15, 16) geführt wird, oder
ein Band (60), insbesondere beschichtetes Papier
oder Pergamentpapier, oder eine dünne Folie aus
Metall oder Kunststoff, insbesondere aus Mylar
(Polyethylenterephthalat)        oder        Tedlar
(Polyvinylfluorid) verwendet wird.

8. Verfahren nach Anspruch 7,
dadurch gekennzeichnet,
daß das an der Unterseite des Gewebes (12) mitlaufende Band (70) als Auffänger für das elastomere Material verwendet wird, in welchem man einen
Sumpf aus dem elastomeren Beschichtungsmaterial bildet, das anschließend auf gewünschte Schichtdicke (40, 50) gebracht wird, und daß gegebenenfalls gleichzeitig zusätzliches elastomeres Material an der Unterseite zwischen dem Gewebe (12) und dem unteren, mitlaufenden Band (70) zugeführt wird.

9. Verfahren nach einem der Ansprüche 1 bis 8,
dadurch gekennzeichnet,
daß die Schichtdicken (40, 50) zu beiden Seiten des Gewebes (12) durch die Festigkeit und/oder die Spannung des mitlaufenden Bandes (60, 70), insbesondere des an der Unterseite des Gewebes (12) mitlaufenden Bandes (60) eingestellt werden, so daß die Laufgeschwindigkeit des Gewebes (12) sowie die Zuführungsgeschwindigkeit der Beschichtungsmasse (1) unabhängig von der Viskosität des elastomeren Materials wählbar sind.

10. Verfahren nach einem der Ansprüche 1 bis 9,
dadurch gekennzeichnet,
daß das elastomere Material (1) in kaltem oder heißem Zustand längs einer schraubenlinienförmigen Bahn auf das Gewebe (12) aufgebracht wird, wobei das Hindurchdrücken der Beschichtungsmasse (1) gegebenenfalls erst dann durchgeführt wird, wenn diese sich etwas verfestigt hat, aber noch fließfähig ist.

11. Vorrichtung zur Durchführung des Verfahrens nach einem der Ansprüche 1 bis 10,
dadurch gekennzeichnet,
daß sie mindestens zwei parallel zueinander verlaufende äußere Spannwalzen (15, 16) aufweist, die in einem einstellbaren Abstand voneinander angeordnet sind und von denen mindestens eine Spannwalze drehbar angetrieben ist, daß die beiden Spannwalzen (15, 16) zur Bildung eines Lauftuches ein endloses Gewebe (12) aufnehmen, über dem eine Beschichtungseinrichtung (55) für elastomeres Material angeordnet ist,
daß an der radial außenliegenden Seite des Gewebes (12) eine Einrichtung (30-35, 36-39) vorgesehen ist, die gegenüber dem Gewebe (12) einen einstellbaren Spalt quer zur Vorschubrichtung des Gewebes bildet und zum Hindurchdrücken der aufgebrachten Beschichtungsmasse (1, 40) dient,
und daß der Einrichtung (30-35, 36-39) eine Halterung (61) zugeordnet ist, von der ein mitlaufendes Band (60) als Trennmittel zuführbar ist.

12. Vorrichtung nach Anspruch 11,
dadurch gekennzeichnet,
daß die Einrichtung (30-35, 36-39) ein Rakel (33), einen Gleitschuh (32), eine feststehende oder drehbare Druckwalze (30), eine Doppelwalze (34, 35) mit umlaufendem Band (31) und/oder eine Kammer (36, 37) aufweist, die an eine Druckquelle für ein inertes Druckgas angeschlossen ist und mit der ein Gasdruckkissen über der Beschichtungsmasse (1, 40) erzeugbar ist.

13. Vorrichtung nach Anspruch 11 oder 12,
dadurch gekennzeichnet,
daß die Positionen des Rakels (33), des Gleitschuhes (32), der Druckwalze (30), der Doppelwalze (34, 35) mit ihrem umlaufenden Band (31) bzw. der Unterseite der Kammer (36, 37) gegenüber den Spannwalzen (15, 16) und dem umlaufenden Gewebe (12) einstellbar sind.

14. Vorrichtung nach einem der Ansprüche 11 bis 13,
dadurch gekennzeichnet,
daß die Kammer als (Breitschlitz-)Düse (36), die sich glockenförmig zur Beschichtungsmasse (40) hin verbreitert, oder als rechteckiger Kasten (37) quer zur Vorschubrichtung ausgebildet ist.

15. Vorrichtung nach einem der Ansprüche 11 bis 14,
dadurch gekennzeichnet,
daß die der Beschichtungsmasse gegenüberliegenden Ränder der Kammer (36, 37) mit Dichtungen (38, 39) in Form von berührungslosen Einfach- oder Mehrfachspaltdichtungen (38) oder in Form von gleitfähigen Dichtstreifen (39), z. B. aus Filz, die auf dem mitlaufenden Band (60) als Trennmittel auf der Beschichtungsmasse (40) abdichtend entlanggleiten, versehen sind, welche den Überdruckraum gegenüber der Beschichtungsmasse (40) abdichten und gegebenenfalls in ihrer Höhe gegenüber der Beschichtungsmasse (40) einstellbar sind.

16. Vorrichtung nach einem der Ansprüche 11 bis 15,
dadurch gekennzeichnet,
daß zusätzlich oder alternativ zu der Druckkammer (36, 37) an der Rückseite des Gewebes (12) eine Unterdruckkammer zum Hindurchdrücken bzw. Hindurchziehen der fließfähigen Beschichtungsmasse vorgesehen ist.

17. Vorrichtung nach einem der Ansprüche 11 bis 16,
dadurch gekennzeichnet,
daß die Beschichtungseinrichtung (55) eine oder mehrere Breitschlitzdüsen aufweist, die in ihrer Positionierung sowohl seitlich als auch in vertikaler Richtung einstellbar, insbesondere synchron mit dem Vorschub des Gewebes (12) quer zu dessen Laufrichtung verfahrbar sind.

18. Vorrichtung nach einem der Ansprüche 11 bis 17,
dadurch gekennzeichnet,
daß zwischen den Spannwalzen (15, 16) an der Unterseite des umlaufenden Gewebes eine weitere Druckwalze (80) sowie eine weitere Halterung vorgesehen sind, von der ein weiteres mitlaufendes Band (70) über die Druckwalze (80) zuführbar ist.

19. Vorrichtung nach einem der Ansprüche 11 bis 18,
dadurch gekennzeichnet,
daß die beiden Spannwalzen (15, 16) eine vertikale Anordnung übereinander bilden,

daß die Einrichtung zum Hindurchdrücken des elastomeren Materials in Form einer Doppelwalze (34, 35) sich neben der unteren Spannwalze (16) befindet, wobei das umlaufende Band (31) der Doppelwalze (34, 35) über einen Umfangsbereich der unteren Spannwalze (16) gegen diese anliegend verläuft, und daß die obere Walze (35) der Doppelwalze (34, 35) mit dem Gewebe (12) auf der unteren Spannwalze (16) einen keilförmigen Einlaufbereich von oben für die Beschichtungsmase aus der darüber angeordneten Beschichtungseinrichtung (55) bildet, wobei die untere Spannwalze (16) zugleich die untere Druckwalze für das an der Unterseite mitlaufende Band (70) bildet.

20. Vorrichtung nach Anspruch 19,
dadurch gekennzeichnet,
daß zwischen dem unteren mitlaufenden Band und der Unterseite des Gewebes (12) eine zusätzliche Düse zur Zuführung von elastomerem Material vorgesehen ist.

21. Vorrichtung nach einem der Ansprüche 11 bis 20,
dadurch gekennzeichnet,
daß die beiden Spannwalzen (15, 16) unter dem zu beschichtenden Gewebe ein endloses mitlaufendes Band in Form eines Schlauches tragen, der zumindest die Breite des Gewebes aufweist und eine durchgehende spannbare Trennfolie bildet.

FIG. 1

FIG. 2

FIG. 3

FIG.4

FIG.5

FIG.6

FIG.7

FIG. 8

FIG.9

FIG.10

FIG. 11

FIG.12

P

36

40

12

50

A

_Fig. 13_

P

37

38

38

40

12

50

A

_Fig. 14_

P

39

38

60

40

12

50

A

_Fig. 15_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 027 543 (LENTIA GmbH) <br> * Seite 5, Zeilen 5-23; Seite 5, Zeile 31 - Seite 6, Zeile 15; Figur 1 * <br> --- | 1,2,6,7,8 | B 29 C 67/14 <br> B 29 B 15/12 |
| Y | EP-A-0 272 104 (AMOCO CORP.) <br> * Spalte 3, Zeilen 36-41; Spalte 5, Zeilen 18-52; Figur 2 * <br> --- | 1,2,6-9,18 | |
| Y | EP-A-0 204 482 (EMHART INDUSTRIES) <br> * Seite 10, Zeilen 26-34 * <br> --- | 1,2,6-9,18 | |
| A | FR-A- 801 718 (INTERNATIONAL LATEX) <br> * Seite 2, Zeile 78 - Seite 3, Zeile 20; Anspruch 1 * <br> --- | 1 | |
| A | GB-A-2 037 187 (AMERON INC.) <br> * Seite 2, Zeilen 26-48; Seite 3, Zeilen 94-128; Figuren 4,6 * <br> --- | 1-3,10 | |
| A | DE-A-3 738 315 (NIEDERBERG-CHEMIE GmbH) <br> * Insgesamt * <br> --- | 1,2,8,9,11,17-20 | RECHERCHIERTE SACHGEBIETE (Int. Cl.5) |
| A | FR-A-2 312 356 (INST. FRANCAIS DU PETROLE) <br> * Seite 3, Zeilen 17-31; Figur 2 * <br> --- | 10,13 | B 29 C <br> B 29 B <br> B 32 B |
| A,D | EP-A-0 134 885 (FIRMA F. OBERDORFER) <br> * Seite 4, Zeilen 9-34 * <br> ----- | 1,3,11 | |

Der vorliegende Recherchenbericht wurde für alle Patentansprüche erstellt

| Recherchenort | Abschlußdatum der Recherche | Prüfer |
|---|---|---|
| DEN HAAG | 07-09-1990 | PHILPOTT G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes Dokument

EPO FORM 1503 03.82 (P0403)